# EUROPÄISCHE PATENTSCHRIFT

(11) **EP 2 937 208 B1**
(45) Veröffentlichungstag und Bekanntmachung des Hinweises auf die Patenterteilung: **14.06.2017**
(21) Anmeldenummer: 14165583.7
(22) Anmeldetag: 23.04.2014
(51) Int. Cl.: A47J 47/00, B29C 45/00, B32B 3/06, B32B 3/08, B32B 3/20, B32B 3/28, B32B 3/30, B32B 27/08, B32B 27/32, B29C 45/14

(54) **Kunststoffbrett und Verfahren zum Herstellen eines solchen**
Plastic board and method for producing the same
Planche en plastique et son procédé de fabrication

(43) Veröffentlichungstag der Anmeldung: 28.10.2015
(73) Patentinhaber: Rotho Kunststoff AG, 5303 Würenlingen (CH)
(72) Erfinder: Thoma, Christian, 79774 Abbruck (DE)
(74) Vertreter: Lemcke, Brommer & Partner Patentanwälte Partnerschaft mbB

(56) Entgegenhaltungen:
- FR-A1- 2 889 933
- JP-A- H07 223 638
- JP-A- H10 243 884

## Beschreibung

Die vorliegende Erfindung betrifft ein Kunststoffbrett, bestehend aus spritzgegossenem Kunststoff, mit einer Oberseite, einer Unterseite und einer umlaufenden Kantenfläche nach dem Oberbegriff des Patentanspruchs 7. Darüber hinaus betrifft die vorliegende Erfindung ein Verfahren zum Herstellen eines solchen Kunststoffbretts in Spritzgießtechnik nach dem Oberbegriff des Patentanspruchs 1.

Das Hauptanwendungsgebiet für ein Kunststoffbrett gemäß der vorliegenden Erfindung sind Haushalt und Küche, Lebensmittelhandel und lebensmittelerzeugende Betriebe, wo solche Kunststoffbretter als Schneidbrett zum Einsatz kommen. Schneidbretter aus Kunststoff haben den großen Vorteil, dass deren Oberflächen für Messerklingen ähnlich schonende Eigenschaften aufweisen wie Holzoberflächen, demgegenüber jedoch deutlich höheren Anforderungen an die Hygiene standhalten können. Dementsprechend weit verbreitet werden Schneidbretter aus Kunststoff verwendet. Diese sind zumeist aus Polypropylen oder einem sonstigen Thermoplasten gefertigt.

Kunststoffbretter, die insbesondere als Schneidbrett verwendet werden sollen, weisen eine Dicke von typischerweise 8 bis 10 mm auf, um eine ausreichende Eigenstabilität beim Schneiden von Lebensmitteln und dergleichen zu gewährleisten. Um ein Kunststoffprodukt mit einer solchen Wandstärke spritzgießen zu können, ist eine überproportional lange Zykluszeit von Nöten:
In einer Spritzgießmaschine wird Kunststoff plastifiziert und unter Druck in ein Spritzgießwerkzeug eingespritzt. Im Spritzgießwerkzeug geht der Kunststoff durch Abkühlen wieder in den festen Zustand über und wird nach dem Öffnen des Spritzgießwerkzeugs als Fertigteil entnommen. Vor dem Entformen muss allerdings der Kunststoff vollständig erstarrt sein, um eine Maßhaltigkeit des Fertigteils zu gewährleisten. Bei dickwandigen Formen dauert dieser Abkühlvorgang naturgemäß überproportional lange.

Bei dickwandigen flächigen Produkten wie dem vorliegenden Kunststoffbrett besteht darüber hinaus die Gefahr eines Verziehens nach dem Entformen, wenn das Entformen bei noch nicht ausreichend abgekühltem Material erfolgt. Gerade beim bevorzugten Einsatzgebiet als Schneidbrett ist es jedoch von größter Wichtigkeit, dass ein Verziehen desselben vermieden wird. Denn ein Schneidbrett muss absolut eben sein, damit es bei seiner Verwendung nicht wackelt.

Um ebene Schneidbretter in der benötigten Dicke von typischerweise mindestens 8 mm im Spritzgießverfahren herzustellen, ist es daher nötig, den in das Spritzgießwerkzeug eingepressten Kunststoff außerordentlich lange im Spritzgießwerkzeug zu belassen, um dort besonders weitgehend abzukühlen, bevor das fertige Produkt entformt wird. Bei Schneidbrettern aus Polypropylen mit einer Dicke von 8 mm, die eben entformt werden und sich nicht verziehen sollen, resultieren so Zykluszeiten von typischerweise etwa sechs Minuten. Zykluszeiten von spritzgegossenen Kunststoffbehältern für Haushalt und Küche beispielsweise liegen dagegen in der Größenordnung von einer halben Minute.

Aus der JP H10-243 884 A ist ein Kunststoffbrett bekannt geworden, das aus zwei spritzgegossenen Hälften zusammengesetzt wird. Beide Hälften weisen jeweils flächenverteilt Stabilisierungselemente auf, die in einem Zwischenraum zwischen den beiden Hälften angeordnet ist. Der Zwischenraum ist ansonsten im Wesentlichen unausgefüllt. Die Stabilisierungselemente werden beim Zusammenfügen der beiden Hälften aufeinandergelegt und stoffschüssig miteinander verbunden, um im Ergebnis die beiden Hälften aneinander festzulegen.

Auch gemäß der vorliegenden Erfindung wird ein Verfahren zum Herstellen eines Kunststoffbretts mit einer Oberseite, einer Unterseite und einer umlaufenden Kantenfläche in Spritzgießtechnik solcherart durchgeführt, dass eine erste Hälfte, welche zumindest die Oberseite des Kunststoffbretts umfasst, und eine zweite Hälfte, welche zumindest die Unterseite des Kunststoffbretts umfasst, spritzgegossen werden. Diese beiden Hälften werden sodann zusammengefügt, um ein Kunststoffbrett mit einer Oberseite und einer Unterseite zu bilden, wobei beide Hälften solcherart geformt werden, dass sich beim Zusammenfügen mindestens ein Hohlraum zwischen den Hälften bildet. Beide Hälften werden aneinander fixiert, um das Kunststoffbrett fertigzustellen.

Dementsprechend besteht das erfindungsgemäße Kunststoffbrett im Wesentlichen aus einer spritzgegossenen ersten Hälfte, welche zumindest die Oberseite des Kunststoffbretts umfasst, und einer spritzgegossenen zweiten Hälfte, welche zumindest die Unterseite des Kunststoffbretts umfasst, wobei beide Hälften zusammengesetzt und aneinander fixiert sind. Zwischen den beiden Hälften ist mindestens ein Hohlraum ausgebildet.

Mit diesen Maßnahmen kann das Kunststoffbrett aus zwei Hälften gefertigt werden, deren Wandstärken viel geringer sind als die Dicke des fertigen Kunststoffbretts. Dementsprechend wird für die Fertigung der beiden Hälften eine sehr viel kürzere Zykluszeit benötigt, als wenn das Kunststoffbrett in einem einzigen Spritzgussvorgang "am Stück" hergestellt wird. Selbst wenn man die benötigte Zeit für das Zusammenfügen der beiden Hälften des erfindungsgemäßen Kunststoffbretts mit hinzunimmt, ergibt sich noch immer eine signifikant kürzere Zykluszeit als dies im Stand der Technik bislang möglich war.

Hinzu kommt, dass das Kunststoffbrett weniger Material benötigt als ein Kunststoffbrett, das in einem einzigen Spritzgussvorgang hergestellt wird; denn der Hohlraum oder gegebenenfalls mehrere Hohlräume bilden ein Volumen des Kunststoffbretts, für das kein Kunststoff verwendet werden muss.

Der vorliegenden Erfindung liegt die Aufgabe zugrunde, ein Verfahren zum Herstellen eines Kunststoffbretts in Spritzgießtechnik mit nochmals verkürzten Zykluszeiten sowie ein Kunststoffbrett aus spritzgegossenem Kunststoff, das in einem solchen Verfahren hergestellt werden kann, zur Verfügung zu stellen.

Gelöst ist diese Aufgabe durch ein Verfahren mit den Merkmalen des Patentanspruchs 1 sowie durch ein Kunststoffbrett mit den Merkmalen des Patentanspruchs 7. Bevorzugte Weiterbildungen des erfindungsgemäßen Verfahrens finden sich in den Ansprüchen 2 bis 6; vorteilhafte Ausgestaltungen des erfindungsgemäßen Kunststoffbretts sind in den Ansprüchen 8 bis 12 niedergelegt.

Das Fixieren der beiden Hälften des erfindungsgemäßen Kunststoffbretts erfolgt im Rahmen der vorliegenden Erfindung demnach in einem Spritzgießwerkzeug, und zwar mittels Anspritzen einer Verbindungskomponente aus Kunststoff an beide Hälften. Diese Verbindungskomponente kann aus dem selben Material wie die beiden Hälften oder wie eine der beiden Hälften bestehen, vorzugsweise handelt es sich jedoch um einen Kunststoff, der aufgrund seines Fließverhaltens leicht im Spritzgießverfahren zu verarbeiten ist und beispielsweise auch leicht durchzufärben ist, da die Verbindungskomponente naturgemäß nicht die hohen Anforderungen an die Stabilität und die Schlagzähigkeit erfüllen muss, wie die Oberseite und die Unterseite des Kunststoffbretts. Für ein erfindungsgemäßes Kunststoffbrett, das als Schneidbrett für Lebensmittel verwendet wird, wäre es beispielsweise vorteilhaft, die beiden Hälften aus Polypropylen zu fertigen, während die Verbindungskomponente aus einem thermoplastischen Polyethylen besteht.

Das Anspritzen einer Verbindungskomponente an die beiden Hälften in einem Spritzgießwerkzeug ermöglicht ein rasches, sicheres und automatisiertes Fixieren der beiden Hälften des Kunststoffbretts aneinander und gewährleistet eine stoffschlüssige Verbindung aller Bestandteile des erfindungsgemäßen Kunststoffbretts. Bevorzugt werden die Hälften so aufeinandergesetzt, dass die Verbindungskomponente umlaufend an einen ebenfalls im Wesentlichen umlaufenden Steg im Bereich der Kantenfläche angespritzt wird, um die Stegkanten, an denen die beiden Hälften aufeinandertreffen, untereinander zu verbinden und nach außen zu bedecken, so dass der Hohlraum zwischen den beiden Hälften nach außen hin abgedichtet ist. Hierfür ist es vorteilhaft, wenn der umlaufende Steg gegenüber den äußeren Kanten der Oberseite und der Unterseite des Kunststoffbretts etwas nach innen zurückgesetzt ist, so dass die Verbindungskomponente den hierdurch entstehenden lichten Raum zwischen den äußeren Kanten der Oberseite und der Unterseite verfüllen kann.

Alternativ oder zusätzlich können die beiden Hälften des erfindungsgemäßen Kunststoffbretts solcherart geformt werden bzw. sein, dass sie beim Zusammenfügen Kanäle zwischen sich bilden, die beim Anspritzen der Verbindungskomponente aus Kunststoff von dieser Verbindungskomponente durchflossen und im Wesentlichen ausgefüllt werden. Solcherart gefüllte Kanäle, die zwischen der Oberseite und der Unterseite des Kunststoffbretts in deren Inneren verlaufen, erhöhen zum einen die Fläche und damit die Festigkeit der stoffschlüssigen Verbindung zwischen den beiden Hälften einerseits und der Verbindungskomponente andererseits, zum anderen erhöhen die Kanäle jedoch auch die mechanische Stabilität des Kunststoffbretts, das sich beim Gebrauch nicht durchbiegen soll. Auch solche Kanäle können durch Stege an den beiden Hälften gebildet sein.

Um die mechanische Stabilität des Kunststoffbretts weiter zu erhöhen, trotzdem in dessen Inneren ein Hohlraum oder mehrere Hohlräume vorhanden sind, ist es bevorzugt, an die beiden Hälften flächenverteilt Stabilisierungselemente anzuformen, die beim Zusammenfügen der beiden Hälften gegenseitig ineinandergreifen oder im einfachsten Fall aufeinander zu liegen kommen und so die beiden Hälften gegeneinander abstützen.

Die flächenverteilten Stabilisierungselemente können ineinandergreifend miteinander verpresst werden, um nicht nur die Stabilität des fertigen Kunststoffbretts zu erhöhen, sondern auch die beiden Hälften aneinander zu fixieren. Dies entlastet die Verbindungskomponente, die dann beispielsweise im Wesentlichen für die Abdichtung des Hohlraums zwischen den beiden Hälften des Kunststoffbretts nach außen zuständig ist, was die optimierte Auswahl eines entsprechenden Materials erleichtert. Das Fixieren der beiden Hälften mittels der Stabilisierungselemente kann alternativ oder zusätzlich zu einer Verpressung durch ein stoffschlüssiges Verbinden der Stabilisierungselemente der beiden Hälften erfolgen. Hierbei können beispielsweise die Stabilisierungselemente vor dem Zusammenfügen der beiden Hälften angeschmolzen werden, beispielsweise mittels einer Infrarotheizung, die die entsprechenden Temperaturen innerhalb weniger Sekunden erzeugt. Durch das Anschmelzen ergibt sich dann beim Fixieren der beiden Hälften aneinander eine Verschweißung der jeweiligen Stabilisierungselemente untereinander.

Vor allem für den Einsatz als Schneidbrett ist das erfindungsgemäße Kunststoffbrett vorteilhafterweise so ausgestaltet, dass dessen Oberseite und dessen Unterseite ganzflächig geschlossen hergestellt werden. Dies ist im Rahmen der vorliegenden Erfindung jedoch nicht zwingend der Fall.

Die beiden Hälften können identisch geformt sein, so dass sie bei Bedarf nacheinander in ein und derselben Spritzgießmaschine gefertigt werden können. Im Rahmen der vorliegenden Erfindung ist es jedoch auch möglich, dass die beiden Hälften unterschiedlich geformt sind, beispielsweise so, dass die erste Hälfte lediglich als Platte ausgebildet ist, während die zweite Hälfte die Unterseite und vier Kantenflächen bildet. Ebenso können die beiden Hälften des erfindungsgemäßen Kunststoffbretts aus demselben Material oder aus unterschiedlichen Materialien gefertigt werden.

Bevorzugterweise werden bzw. sind die beiden Hälften des erfindungsgemäßen Kunststoffbretts solcherart geformt, dass sie beim Zusammenfügen im Bereich der Kantenfläche des Kunststoffbretts wenigstens teilweise aneinanderstoßen und hierdurch einen entlang der Kantenfläche im Wesentlichen umlaufenden Steg bilden, mit dem mindestens ein Hohlraum zwischen den beiden Hälften nach außen zu der Kantenfläche hin begrenzt wird. Diese Kantenfläche ist dann, wenn das Kunststoffbrett rund oder abgerundet ausgebildet ist, stetig umlaufend, während sie beispielsweise dann, wenn das Kunststoffbrett mit rechteckiger Grundform ausgebildet ist, aus vier Teilabschnitten, nämlich zwei langen Teilkantenflächen und zwei kurzen Teilkantenflächen besteht.

Der vorzugsweise vorhandene Steg, der im Wesentlichen umlaufend ausgebildet ist, bietet den Vorteil, die beiden Hälften an dieser Stelle leicht aneinander fixieren zu können und gegebenenfalls einen durch den Steg begrenzten Hohlraum im Inneren des Kunststoffbretts nach außen hin abzudichten. Gerade bei einem Einsatz des erfindungsgemäßen Kunststoffbretts als Schneidbrett für die Lebensmittelverarbeitung ist eine solche Abdichtung des Hohlraums aus hygienischen Gründen wichtig.

Die Kantenfläche des erfindungsgemäßen Kunststoffbretts kann allerdings auch durchbrochen sein, beispielsweise durch Mündungen von Kanälen, die im Inneren des Kunststoffbretts gebildet sind und den Hohlraum zwischen den beiden Hälften in mehrere Teilhohlräume aufteilen.

Insbesondere zum Einsatz als Schneidbrett kann das erfindungsgemäße Kunststoffbrett mit mindestens einer Grifföffnung versehen sein, die sowohl die Oberseite als auch die Unterseite des Kunststoffbretts durchbricht. Diese Grifföffnung wird im Rahmen der Erfindung als Teil der Kantenfläche bzw. als zweite, um die Grifföffnung umlaufende Kantenfläche behandelt und kann in diesem Sinne beispielsweise ebenfalls mit einem im Wesentlichen umlaufenden Steg versehen sein, der einen lichten Raum zwischen der Oberseite und der Unterseite des Kunststoffbretts offenlässt, indem der Steg etwas ins Innere des Kunststoffbretts zurückgesetzt angeordnet ist, wobei dieser lichte Raum dann vorzugsweise ebenfalls von der Verbindungskomponente verfüllt wird.

Ein Ausführungsbeispiel für ein erfindungsgemäß ausgestaltetes Kunststoffbrett, anhand dessen auch ein Ausführungsbeispiel für ein erfindungsgemäß ausgestaltetes Verfahren ersichtlich ist, wird im Folgenden unter Bezugnahme auf die beigefügten Zeichnungen näher beschrieben und erläutert. Es zeigen:
- Figur 1: ein erfindungsgemäß ausgestaltetes Kunststoffbrett in perspektivischer Ansicht;
- Figur 2: das Kunststoffbrett aus Figur 1, jedoch in einer Explosions-darstellung;
- Figur 3: einen Zwischenschritt bei der Herstellung des Kunststoffbretts gemäß den Figuren 1 und 2;
- Figur 4: einen Zwischenschritt bei der Herstellung des Kunststoffbretts gemäß den Figuren 1 und 2.

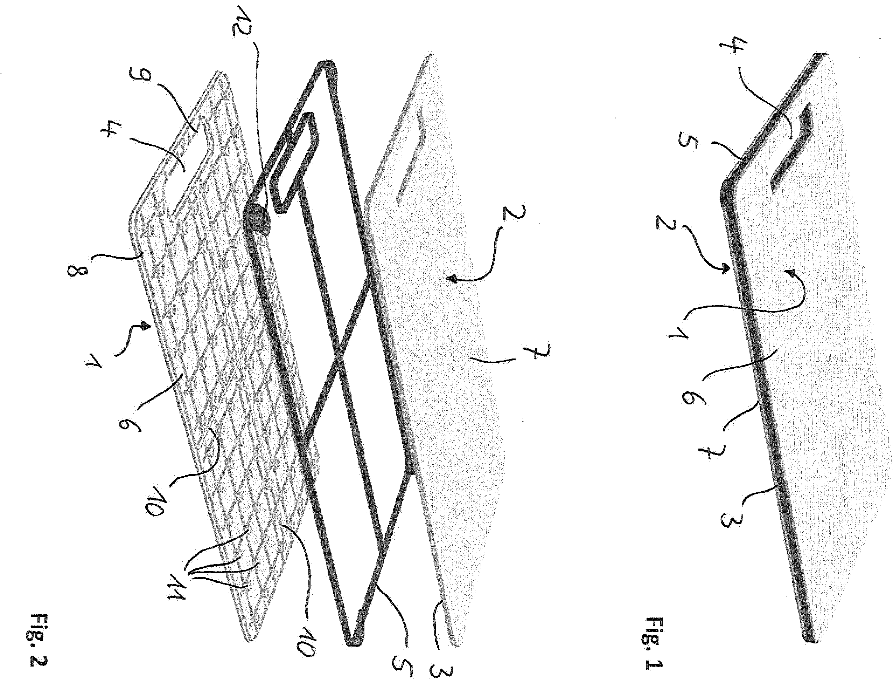

Figur 1 zeigt ein Ausführungsbeispiel für ein als Schneidbrett ausgestaltetes erfindungsgemäßes Kunststoffbrett in perspektivischer Ansicht. Erkennbar sind eine Oberseite 1, die insbesondere zum Schneiden von Lebensmitteln geeignet ist, eine Unterseite 2 sowie eine umlaufende, aus vier Abschnitten zusammengesetzte Kantenfläche 3. Das hier dargestellte Kunststoffbrett besitzt eine Dicke von ca. 8 mm. An der links dargestellten kurzen Seite der rechteckigen Grundform ist eine Grifföffnung 4 vorgesehen, um das Kunststoffbrett leicht ergreifen und festhalten zu können.

Erfindungsgemäß besteht das hier dargestellte Kunststoffbrett aus einer ersten Hälfte 6, welche die Oberseite 1 umfasst, und einer zweiten Hälfte 7, welche die Unterseite 2 umfasst. Die beiden Hälften 6, 7 stoßen umlaufend an der Kantenfläche 3 aneinander an, was in den nachfolgend beschriebenen Darstellungen genauer zu erkennen ist. An der umlaufenden Kantenfläche 3 ist eine Verbindungskomponente 5 angespritzt, die vorliegend durchgefärbt ist, was sie von der ersten Hälfte 6 und der zweiten Hälfte 7 farblich absetzt.

Figur 2 ist eine schematische Darstellung, wiederum in Perspektive, wobei das Kunststoffbrett aus Figur 1 in einer Explosionsdarstellung in seine drei separat spritzgegossenen Teile separiert ist. Die erste Hälfte 6 mit der Oberseite 1 des Kunststoffbretts ist in dieser Darstellung unten angeordnet, während die zweite Hälfte 7 mit der Unterseite 2 hier oben liegt. An der ersten Hälfte 6 ist zu erkennen, dass diese im Bereich der Kantenfläche 3 mit einem nach innen eingezogenen Steg 8 versehen ist. Zwischen diesem Steg 8 und der äußeren Kante der Oberseite 1 ist Platz für die Verbindungskomponente 5 geschaffen. Diese wird erfindungsgemäß an die aufeinandergesetzten ersten und zweiten Hälften 6, 7 angespritzt, so dass sich, wie in Figur 2 erkennbar, ein um die Kantenfläche 3 umlaufendes Volumen der Verbindungskomponente 5 ausbildet.

Der Steg 8 im Bereich der Kantenfläche 3 findet sein Pendant an der Grifföffnung 4 als Grifföffnungssteg 9. Auch dieser Grifföffnungssteg 9 ist gegenüber der Kante der Oberseite 1 zurückversetzt, um Raum für die Verbindungskomponente 5 zu schaffen.

Der Steg 8 sowie auch der Grifföffnungssteg 9 weisen Unterbrechungen auf, in denen ein Kanal 10 mündet, welcher sich durch das Innere der zusammengesetzten ersten und zweiten Hälften 6, 7 in Kreuzform zieht. Dementsprechend ist in Figur 2 zu erkennen, dass sich die Verbindungskomponente 5 beim Anspritzen nicht nur um die Kantenfläche 3 umlaufend verteilt hat, sondern auch in den Kanal 10 hineingeflossen ist und diesen ausgefüllt hat sowie um die Grifföffnung 4 herum geflossen ist.

Wie aus Figur 2 ersichtlich, verbindet die Verbindungskomponente 5 die beiden Hälften 6, 7 des Kunststoffbretts stoffschlüssig nicht nur entlang der umlaufenden Kantenfläche 3, sondern auch in einem hier kreuzförmig durch das Innere des Kunststoffbretts verlaufenden Kanal 10, was die Festigkeit der Verbindung gewährleistet. Die umlaufende Verbindungskomponente 5 dichtet insbesondere auch den Hohlraum zwischen der ersten Hälfte 6 und der zweiten Hälfte 7 nach außen hin ab, der sich, wie aus Figur 2 unmittelbar ersichtlich, beim Aufeinandersetzen der beiden Hälften 6, 7 zwischen diesen bildet. Genaugenommen handelt es sich um vier Teilhohlräume, die durch den Kanal 10 voneinander getrennt sind.

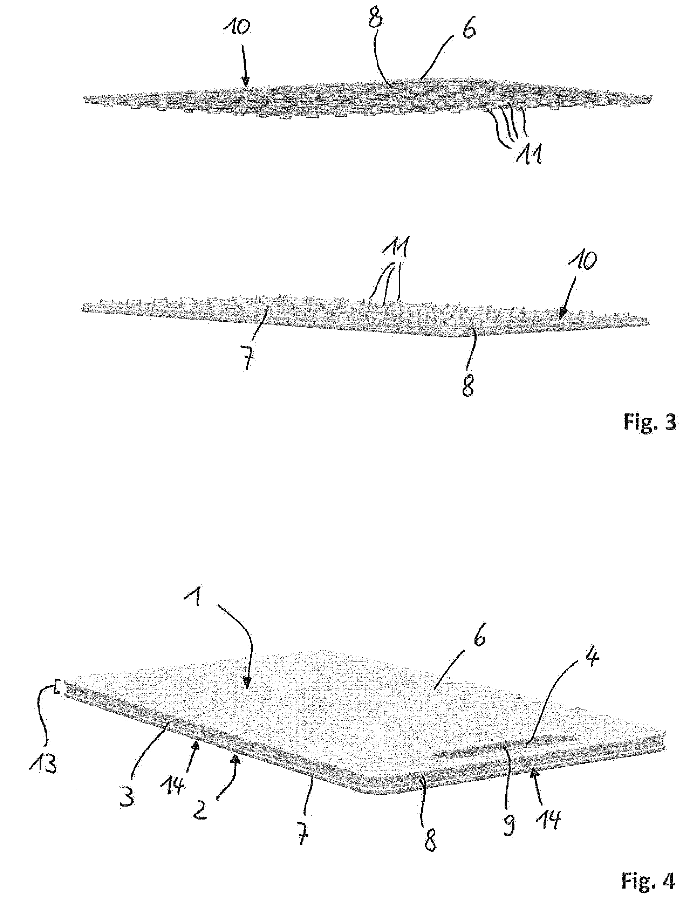

Wie in Figur 2 ebenfalls zu sehen, jedoch in Figur 3 besser erkennbar ist, sind sowohl die erste Hälfte 6 als auch die zweite Hälfte 7 flächenverteilt mit Stabilisierungselementen 11 versehen, die beim Aufeinandersetzen der ersten und zweiten Hälften 6, 7 jeweils aufeinander treffen und so trotz des zwischen den beiden Hälften 6, 7 gebildeten Hohlraums verhindern, dass die Oberseite 1 und/oder die Unterseite 2 auf Druck nachgeben bzw. sich durchbiegen. Die Stabilisierungselemente 11 bestehen vorliegend aus hohlzylindrischen Noppen, die bis zu einem bestimmten Grad ineinander eintauchen und sich gegeneinander abstützen. Die hohlzylindrische Ausformung ermöglicht, dass auch die Stabilisierungselemente 11 dünnwandig ausgebildet sind, so dass die beiden Hälften 6, 7, weil durchgehend dünnwandig mit einer Wandstärke von typischerweise weniger als 2 mm ausgebildet, mit vorteilhaft kurzen Zykluszeiten spritzgegossen werden können.

Nach Spritzgießen der beiden Hälften 6, 7, die in Figur 3 dargestellt und bis auf die Stabilisierungselemente 11 identisch ausgebildet sind, weswegen der Steg 8 hälftig durch die erste Hälfte 6 und die zweite Hälfte 7 gebildet ist, werden die beiden Hälften 6, 7 erfindungsgemäß aufeinandergesetzt, um sie in ein weiteres Spritzgießwerkzeug einzusetzen, in dem die Verbindungskomponente 5 angespritzt wird. Diesen Zwischenschritt zeigt Figur 4: Hier sind die erste Hälfte 6 mit der Oberseite 1 und die zweite Hälfte 7 mit der Unterseite 2 aufeinandergesetzt. Im Bereich der umlaufenden Kantenfläche 3 ist der hälftig von beiden Hälften 6, 7 gebildete Steg 8 nach innen versetzt, so dass sich zwischen den äußeren Kanten der Oberseite 1 und der Unterseite 2 ein lichter Raum 13 für die Verbindungskomponente 5 bildet. Entsprechendes ist an der Grifföffnung 4 vorgesehen; dort ist der Grifföffnungssteg 9 nach innen versetzt, um Platz für die Verbindungskomponente 5 zu schaffen, wie dies in Figur 2 genauer zu erkennen ist.

Über Mündungen 14 des Kanals 10 in der Kantenfläche 3 fließt die Verbindungskomponente 5 beim Anspritzen auch in den Kanal 10 hinein und füllt diesen im Wesentlichen vollständig aus.

Der umlaufende Steg 8 sowie die Begrenzungen des Kanals 10 sind vorzugsweise relativ dicht ausgebildet, so dass die Verbindungskomponente 5 nicht in den Hohlraum hinter dem Steg 8 eindringen kann. Je nach verwendetem Material für die Verbindungskomponente 5 ist es jedoch unkritisch, wenn der Steg 8 nicht vollständig flüssigkeitsdicht geschlossen ist. Für die Festigkeit der Verbindung zwischen den beiden Hälften 6, 7 des Kunststoffbretts sowie die Stabilität desselben ist es auch nicht unbedingt notwendig, dass der Kanal 10 vollständig von der Verbindungskomponente 5 ausgefüllt wird.

In dem in Figur 4 dargestellten Verfahrensschritt werden die beiden Hälften 6, 7 gegeneinandergepresst, was vorzugsweise im Spritzgießwerkzeug für die Verbindungskomponente 5 geschieht. Aufgrund dieses Aufeinanderpressens werden die Stabilisierungselemente 11 der beiden Hälften 6, 7 jeweils ineinandergepresst und so miteinander verpresst, so dass schon die Verpressung der Verbindungselemente 11 für ein sicheres Fixieren der beiden Hälften 6, 7 aneinander sorgt. Um die Fixierung noch nachhaltiger durchzuführen, können die Stabilisierungselemente 11 vor dem Zusammenfügen der beiden Hälften 6, 7 (Figur 3) beispielsweise mittels Infrarotheizungen angeschmolzen werden, so dass die Stabilisierungselemente 11 beim Zusammenfügen nicht nur ineinander greifend miteinander verpresst werden, sondern miteinander verschweißt, also stoffschlüssig miteinander verbunden werden.

Wie schließlich Figur 2 zeigt und Figur 1 andeutet, wird die Verbindungskomponente 5 im vorliegenden Ausführungsbeispiel so angespritzt, dass sie sich an den Ecken der Unterseite 2 über die Unterseite 2 erstreckt, um Indikatorelemente 12 zu bilden. Da die Verbindungskomponente 5 im vorliegenden Ausführungsbeispiel aus durchgefärbtem thermoplastischen Polyethylen besteht, während die erste Hälfte 6 und die zweite Hälfte 7 aus weißem Polypropylen gebildet sind, ergibt sich ein farblich abgesetzter Effekt sowohl an der Kantenfläche 3 als auch an den Ecken der Unterseite 2, die aufgrund der Indikatorelemente 12 auf den ersten Blick als Unterseite 2 erkennbar ist. Dies kann als Designelement genutzt werden, es kann aber auch Indikatorwirkung haben, um die Oberseite 1 des Kunststoffbretts von der Unterseite 2 unterscheiden zu können. Dies kann beispielsweise wichtig sein, wenn die Oberseite 1 und die Unterseite 2 aus unterschiedlichen Kunststoffmaterialien gefertigt sind.

Die Zykluszeiten aller drei Spritzgießschritte, zum Spritzgießen der ersten Hälfte 6, zum Spritzgießen der zweiten Hälfte 7 - was vorzugsweise gleichzeitig vorgenommen wird - sowie zum Anspritzen der Verbindungskomponente 5, zuzüglich der Handlingszeiten zwischen den einzelnen Spritzgießschritten, ist signifikant kürzer als die Zykluszeit, die zum Spritzgießen eines massiven Kunststoffbretts derselben Dimensionen gebraucht wird, da letzteres, wie eingangs erwähnt, wegen der hohen Materialdicke überproportional lange Abkühlzeiten im Spritzgießwerkzeug benötigt, um es entformen zu können, ohne dass es sich nach dem Entformen verzieht.

Gleichzeitig muss für die Herstellung des vorliegenden Kunststoffbretts wegen der darin befindlichen Hohlräume deutlich weniger Material aufgewendet werden, ohne dass dies auf Kosten der Stabilität ginge. Die vorliegende Erfindung ermöglicht es daher, insbesondere Schneidbretter für die Lebensmittelverarbeitung im Spritzgießverfahren mit kürzeren Taktzeiten und geringeren Materialkosten als bisher herzustellen. Gleichzeitig ermöglicht das separate Anspritzen der Verbindungskomponente das Vorsehen von Gestaltungselementen durch farbliches Absetzen und dergleichen.

## Patentansprüche

1. Verfahren zum Herstellen eines Kunststoffbretts mit einer Oberseite (1), einer Unterseite (2) und mindestens einer Kantenfläche (3) in Spritzgießtechnik, mit folgenden Verfahrensschritten:
- Spritzgießen einer ersten Hälfte (6), welche zumindest die Oberseite (1) des Kunststoffbretts umfasst,
- Spritzgießen einer zweiten Hälfte (7), welche zumindest die Unterseite (2) des Kunststoffbretts umfasst,
- Zusammenfügen der ersten und der zweiten Hälfte (6, 7), um ein Kunststoffbrett mit einer Oberseite (1) und einer Unterseite (2) zu bilden,
- wobei die beiden Hälften (6, 7) solcherart geformt werden, dass sich beim Zusammenfügen mindestens ein Hohlraum zwischen den Hälften (6, 7) bildet,
- Fixieren der beiden Hälften (6, 7) aneinander,
**dadurch gekennzeichnet,**
**dass** das Fixieren der beiden Hälften (6, 7) zumindest teilweise mittels Anspritzen einer Verbindungskomponente (5) aus Kunststoff an beide Hälften (6, 7) in einem Spritzgießwerkzeug erfolgt.

2. Verfahren nach Anspruch 1, wobei die beiden Hälften (6, 7) solcherart geformt werden, dass die Hälften (6, 7) beim Zusammenfügen im Bereich der Kantenfläche (3) des Kunststoffbretts wenigstens teilweise aneinanderstoßen und hierdurch einen entlang der Kantenfläche (3) im Wesentlichen umlaufenden Steg (8) bilden, mit dem mindestens ein Hohlraum zwischen den beiden Hälften (6, 7) nach außen zu der Kantenfläche (3) hin begrenzt wird.

3. Verfahren nach Anspruch 2, wobei die Verbindungskomponente (5) zumindest im Bereich der Kantenfläche (3) umlaufend an den im Wesentlichen umlaufenden Steg (8) angespritzt wird, um den mindestens einen Hohlraum zwischen den beiden Hälften (6, 7) nach außen hin abzudichten.

4. Verfahren nach mindestens einem der Ansprüche 1 bis 3, wobei die beiden Hälften (6, 7) solcherart geformt werden, dass sie beim Zusammenfügen Kanäle (10) zwischen sich bilden, die beim Anspritzen der Verbindungskomponente (5) aus Kunststoff von dieser Verbindungskomponente (5) durchflossen und im Wesentlichen ausgefüllt werden.

5. Verfahren nach mindestens einem der Ansprüche 1 bis 4, wobei an die beiden Hälften (6, 7) flächenverteilt Stabilisierungselemente (11) angeformt werden, die beim Zusammenfügen der beiden Hälften (6, 7) gegenseitig ineinandergreifen oder aufeinander zu liegen kommen.

6. Verfahren nach Anspruch 5, wobei die Stabilisierungselemente (11) der beiden Hälften (6, 7), ineinandergreifend miteinander verpresst und/oder stoffschlüssig miteinander verbunden werden, um die beiden Hälften (6, 7) aneinander zu fixieren.

7. Kunststoffbrett, bestehend aus spritzgegossenem Kunststoff, mit einer Oberseite (1), einer Unterseite (2) und mindestens einer Kantenfläche (3), wobei das Kunststoffbrett im Wesentlichen aus einer spritzgegossenen ersten Hälfte (6), welche zumindest die Oberseite (1) des Kunststoffbretts umfasst, und einer spritzgegossenen zweiten Hälfte (7), welche zumindest die Unterseite (2) des Kunststoffbretts umfasst, zusammengesetzt ist, und wobei mindestens ein Hohlraum zwischen den beiden Hälften (6, 7) ausgebildet ist und die beiden Hälften (6, 7) aneinander fixiert sind,
**dadurch gekennzeichnet, dass** die beiden Hälften (6, 7) zumindest teilweise mittels einer im Spritzgießverfahren angespritzten Verbindungskomponente (5) aus Kunststoff aneinander fixiert sind.

8. Kunststoffbrett nach Anspruch 7, wobei die beiden Hälften (6, 7) im Bereich der Kantenfläche (3) des Kunststoffbretts wenigstens teilweise aneinanderstoßen und hierdurch einen entlang der Kantenfläche (3) im Wesentlichen umlaufenden Steg (8) bilden, der mindestens einen Hohlraum zwischen den beiden Hälften (6, 7) nach außen zu der Kantenfläche (3) hin begrenzt.

9. Kunststoffbrett nach Anspruch 8, wobei die Verbindungskomponente (5) zumindest im Bereich der Kantenfläche (3) umlaufend an den im wesentlichen umlaufenden Steg (8) angespritzt ist, um den mindestens einen Hohlraum zwischen den beiden Hälften (6, 7) nach außen hin abzudichten.

10. Kunststoffbrett nach mindestens einem der Ansprüche 7 bis 9, wobei die beiden Hälften (6, 7) Kanäle (10) zwischen sich bilden, die von der Verbindungskomponente (5) aus Kunststoff im Wesentlichen ausgefüllt sind.

11. Kunststoffbrett nach mindestens einem der Ansprüche 7 bis 10, wobei die beiden Hälften (6, 7) mit flächenverteilten Stabilisierungselementen (11) versehen sind, die jeweils gegenseitig ineinandergreifen oder aufeinander aufliegen.

12. Kunststoffbrett nach Anspruch 11, wobei die Stabilisierungselemente (11) der beiden Hälften (6, 7), ineinandergreifend miteinander verpresst und/oder stoffschlüssig miteinander verbunden sind, um die beiden Hälften (6, 7) aneinander zu fixieren.

## Claims

1. Method of producing a plastics board having an upper side (1), a lower side (2) and at least one edge face (3) by the injection-moulding technique, having the following method steps:
- injection-moulding a first half (6), which comprises at least the upper side (1) of the plastics board,
- injection-moulding a second half (7), which comprises at least the lower side (2) of the plastics board,
- fitting the first and second halves (6, 7) together in order to form a plastics board having an upper side (1) and a lower side (2),
- wherein the two halves (6, 7) are formed in such a way that, when they are fitted together, at least one cavity is formed between the halves (6, 7),
- fixing the two halves (6, 7) to one another,
**characterised in that**
the fixing of the two halves (6, 7) is effected at least partly by application of a connecting component (5) made of plastics to both halves (6, 7) by injection-moulding in an injection-moulding tool.

2. Method according to claim 1, wherein the two halves (6, 7) are formed in such a way that the halves (6, 7), when they are fitted together, at least partly abut one another in the region of the edge face (3) and, as a result, form a rib (8) extending substantially peripherally along the edge face (3), with which rib at least one cavity between the two halves (6, 7) is delimited outwardly towards the edge face (3).

3. Method according to claim 2, wherein the connecting component (5) is applied by injection-moulding to the substantially peripheral rib (8) around the periphery, at least in the region of the edge face (3), in order to seal the at least one cavity between the two halves (6, 7) towards the outside.

4. Method according to at least one of claims 1 to 3, wherein the two halves (6, 7) are formed in such a way that, when they are fitted together, they form between them channels (10) through which the connecting component (5) flows when the said connecting component (5) made of plastics is applied by injection-moulding and which are substantially filled by the said connecting component.

5. Method according to at least one of claims 1 to 4, wherein stabilising elements (11) are formed integrally with and distributed over the surface of the two halves (6, 7), which stabilising elements interengage one another or come to rest on one another when the two halves (6, 7) are fitted together.

6. Method according to claim 5, wherein the stabilising elements (11) of the two halves (6, 7) are pressed into inter-engagement with one another and/or are bonded to one another in order to fix the two halves (6, 7) to one another.

7. Plastics board, consisting of injection-moulded plastics, having an upper side (1), a lower side (2) and at least one edge face (3), wherein the plastics board is composed substantially of an injection-moulded first half (6), which comprises at least the upper side (1) of the plastics board, and an injection-moulded second half (7), which comprises at least the lower side (2) of the plastics board, and wherein at least one cavity is formed between the two halves (6, 7) and the two halves (6, 7) are fixed to one another,
**characterised in that**
the two halves (6, 7) have been fixed to one another at least partly by means of a connecting component (5) made of plastics applied by injection-moulding in an injection-moulding process.

8. Plastics board according to claim 7, wherein the two halves (6, 7) at least partly abut one another in the region of the edge face (3) of the plastics board and, as a result, form a rib (8) extending substantially peripherally along the edge face (3), which rib delimits at least one cavity between the two halves (6, 7) outwardly towards the edge face (3).

9. Plastics board according to claim 8, wherein the connecting component (5) has been applied by injection-moulding to the substantially peripheral rib (8) around the periphery, at least in the region of the edge face (3), in order to seal the at least one cavity between the two halves (6, 7) towards the outside.

10. Plastics board according to at least one of claims 7 to 9, wherein the two halves (6, 7) form between them channels (10) which are substantially filled by the connecting component (5) made of plastics.

11. Plastics board according to at least one of claims 7 to 10, wherein the two halves (6, 7) are provided with stabilising elements (11) distributed over their surface, which stabilising elements interengage with one another or rest on one another.

12. Plastics board according to claim 11, wherein the stabilising elements (11) of the two halves (6, 7) have been pressed into inter-engagement with one another and/or bonded to one another in order to fix the two halves (6, 7) to one another.

## Revendications

1. Procédé de fabrication, par la technique de moulage par injection, d'une planche en matière plastique comprenant une face supérieure (1), une face inférieure (2) et au moins une surface de chant (3), incluant les étapes opératoires suivantes :
- moulage par injection d'une première moitié (6) incluant au moins la face supérieure (1) de la planche en matière plastique,
- moulage par injection d'une seconde moitié (7) incluant au moins la face inférieure (2) de ladite planche en matière plastique;
- assemblage desdites première et seconde moitiés (6, 7), de manière à former une planche en matière plastique comprenant une face supérieure (1) et une face inférieure (2),
- les deux moitiés (6, 7) étant configurées de telle sorte qu'au moins une cavité se forme entre lesdites moitiés (6, 7), au stade de l'assemblage,
- assujettissement des deux moitiés (6, 7) l'une à l'autre,
**caractérisé par le fait**
**que** l'assujettissement des deux moitiés (6, 7) s'effectue en rapportant un composant de jonction (5) en matière plastique sur lesdites deux moitiés (6, 7), au moins partiellement, dans un outil de moulage par injection.

2. Procédé selon la revendication 1, dans lequel les deux moitiés (6, 7) sont configurées de telle sorte que lesdites moitiés (6, 7) viennent au moins partiellement en butée l'une contre l'autre au stade de l'assemblage, dans la région de la surface de chant (3) de la planche en matière plastique, et forment ainsi une membrure (8) qui longe, pour l'essentiel, la périphérie de ladite surface de chant (3) et par laquelle au moins une cavité est délimitée, entre lesdites deux moitiés (6, 7), vers l'extérieur en direction de ladite surface de chant (3).

3. Procédé selon la revendication 2, dans lequel le composant de jonction (5) est rapporté par moulage par injection sur la membrure (8) substantiellement périphérique, avec étendue sur le pourtour au moins dans la région de la surface de chant (3), de manière à assurer l'étanchéité, vers l'extérieur, de la cavité à présence minimale entre les deux moitiés (6, 7).

4. Procédé selon au moins l'une des revendications 1 à 3, dans lequel les deux moitiés (6, 7) sont configurées de telle sorte qu'elles forment entre elles, au stade de l'assemblage, des canaux (10) qui, lors du moulage par injection rapporté du composant de jonction (5) en matière plastique, sont parcourus et substantiellement comblés par ce composant de jonction (5).

5. Procédé selon au moins l'une des revendications 1 à 4, dans lequel des éléments de stabilisation (11), moulés solidairement sur les deux moitiés (6, 7) avec répartition sur la surface, s'interpénètrent ou viennent mutuellement en applique au stade de l'assemblage desdites deux moitiés (6, 7).

6. Procédé selon la revendication 5, dans lequel les éléments de stabilisation (11) des deux moitiés (6, 7) sont pressés les uns contre les autres avec interpénétration et/ou sont solidarisés matériellement, de manière à assujettir lesdites deux moitiés (6, 7) l'une à l'autre.

7. Planche en matière plastique constituée d'une matière plastique moulée par injection, comprenant une face supérieure (1), une face inférieure (2) et au moins une surface de chant (3), sachant que ladite planche en matière plastique est composée, pour l'essentiel, d'une première moitié (6) moulée par injection et incluant au moins la face supérieure (1) de ladite planche en matière plastique, et d'une seconde moitié (7) moulée par injection et incluant au moins la face inférieure (2) de ladite planche en matière plastique, et sachant qu'au moins une cavité est réservée entre les deux moitiés (6, 7), et assujettit lesdites deux moitiés (6, 7) l'une à l'autre,
**caractérisée par le fait**
**que** les deux moitiés (6, 7) sont assujetties l'une à l'autre, au moins partiellement, au moyen d'un composant de jonction (5) en matière plastique rapporté suivant le procédé de moulage par injection.

8. Planche en matière plastique selon la revendication 7, dans laquelle les deux moitiés (6, 7) viennent au moins partiellement en butée l'une contre l'autre dans la région de la surface de chant (3) de ladite planche en matière plastique, et forment ainsi une membrure (8) qui longe, pour l'essentiel, la périphérie de ladite surface de chant (3) et délimite au moins une cavité, entre lesdites deux moitiés (6, 7), vers l'extérieur en direction de ladite surface de chant (3).

9. Planche en matière plastique selon la revendication 8, dans laquelle le composant de jonction (5) est rapporté par moulage par injection sur la membrure (8) substantiellement périphérique, avec étendue sur le pourtour au moins dans la région de la surface de chant (3), de manière à assurer l'étanchéité, vers l'extérieur, de la cavité à présence minimale entre les deux moitiés (6, 7).

10. Planche en matière plastique selon au moins l'une des revendications 7 à 9, dans laquelle les deux moitiés (6, 7) forment, entre elles, des canaux (10) qui sont substantiellement comblés par le composant de jonction (5) en matière plastique.

11. Planche en matière plastique selon au moins l'une des revendications 7 à 10, dans laquelle les deux moitiés (6, 7) sont pourvues d'éléments de stabilisation (11) répartis sur la surface, qui s'interpénètrent respectivement ou viennent respectivement en applique les uns contre les autres.

12. Planche en matière plastique selon la revendication 11, dans laquelle les éléments de stabilisation (11) des deux moitiés (6, 7) sont pressés les uns contre les autres avec interpénétration et/ou sont solidarisés matériellement, de manière à assujettir lesdites deux moitiés (6, 7) l'une à l'autre.
